# FASCICULE DE BREVET EUROPEEN

(11) **EP 1 110 409 B1**
(45) Date de publication et mention de la délivrance du brevet: **02.07.2003**
(21) Numéro de dépôt: 99940264.7
(22) Date de dépôt: 01.09.1999
(51) Int. Cl.: H04N 7/36, H04N 7/26

(54) **PROCEDE D'ESTIMATION DU MOUVEMENT ENTRE DEUX IMAGES**
VERFAHREN ZUR BEWEGUNGSSCHÄTZUNG ZWISCHEN ZWEI BILDERN
METHOD FOR ESTIMATING MOTION BETWEEN TWO IMAGES

(30) Priorité: 04.09.1998 FR 9811227
(43) Date de publication de la demande: 27.06.2001
(73) Titulaire: FRANCE TELECOM SA, 75015 Paris (FR); TELEDIFFUSION DE FRANCE S.A., 75015 Paris (FR)
(72) Inventeur: LAURENT-CHATENET, Nathalie, F-35630 Vignoc (FR); LECHAT, Patrick, F-34730 Prades Le Lez (FR); SANSON, Henri, F-35690 Acigne (FR)
(74) Mandataire: Bentz, Jean-Paul
(86) Numéro de dépôt international: FR9902076
(87) Numéro de publication internationale: WO00014969

(56) Documents cités:
- EP-A- 0 721 287
- EP-A- 0 765 087
- US-A- 5 296 927
- SZELISKI R ET AL: "MOTION ESTIMATION WITH QUADTREE SPLINES" IEEE TRANSACTIONS ON PATTERN ANALYSIS AND MACHINE INTELLIGENCE, vol. 18, no. 12, 1 décembre 1996 (1996-12-01), pages 1199-1210, XP000640566
- SANSON H: "TOWARD A ROBUST PARAMETRIC IDENTIFICATION OF MOTION ON REGIONS OF ARBITRARY SHAPE BY NON-LINEAR OPTIMIZATION" PROCEEDINGS OF THE INTERNATIONAL CONFERENCE ON IMAGE PROCESSING (ICIP), WASHINGTON, OCT. 23 - 26, 1995, vol. 1, 23 octobre 1995 (1995-10-23), pages 203-206, XP000624210 INSTITUTE OF ELECTRICAL AND ELECTRONICS ENGINEERS
- MOULIN P ET AL: "APPLICATION OF A MULTIRESOLUTION OPTICAL-FLOW-BASED METHOD FOR MOTION ESTIMATION TO VIDEO CODING" PROCEEDINGS OF THE INTERNATIONAL SYMPOSIUM ON CIRCUITS AND SYSTEMS (ISCS), CHICAGO, MAY 3 - 6, 1993, vol. 1, 3 mai 1993 (1993-05-03), pages 1-4, XP000409920 INSTITUTE OF ELECTRICAL AND ELECTRONICS ENGINEERS
- ALTUNBASAK Y ET AL: "TWO-DIMENSIONAL OBJECT-BASED CODING USING A CONTENT-BASED MESH AND AFFINE MOTION PARAMETERIZATION" PROCEEDINGS OF THE INTERNATIONAL CONFERENCE ON IMAGE PROCESSING (ICIP), WASHINGTON, OCT. 23 - 26, 1995, vol. 2, 23 octobre 1995 (1995-10-23), pages 394-397, XP000623991 INSTITUTE OF ELECTRICAL AND ELECTRONICS ENGINEERS
- DUGELAY J -L ET AL: "DIFFERENTIAL METHODS FOR THE IDENTIFICATION OF 2D AND 3D MOTION MODELS IN IMAGE SEQUENCES" SIGNAL PROCESSING. IMAGE COMMUNICATION, vol. 7, no. 1, 1 mars 1995 (1995-03-01), pages 105-127, XP000495187
- LECHAT P ET AL: "Scalable image coding with fine granularity based on hierarchical mesh" VISUAL COMMUNICATIONS AND IMAGE PROCESSING '99, SAN JOSE, CA, USA, 25-27 JAN. 1999, vol. 3653, pt.1-2, 25 - 27 janvier 1999, pages 1130-1142, XP000862993 Proceedings of the SPIE - The International Society for Optical Engineering, 1998, SPIE-Int. Soc. Opt. Eng, USA ISSN: 0277-786X
- CHANG J -Y ET AL: "Edge-based motion compensated classified DCT with quadtree for image sequence coding" SIGNAL PROCESSING. IMAGE COMMUNICATION,NL,ELSEVIER SCIENCE PUBLISHERS, AMSTERDAM, vol. 11, no. 3, 1 janvier 1998 (1998-01-01), page 187-197 XP004107302 ISSN: 0923-5965

## Description

La présente invention concerne un procédé d'estimation du mouvement entre deux images numériques.

Le mouvement entre deux images successives, I₁ et I₂, se définit généralement sous la forme d'un champ de mouvement associé à l'une ou l'autre des images I₁, I₂ et constitué de vecteurs déplacement se rapportant chacun à un point de l'image concernée. Le vecteur déplacement est un vecteur à deux dimensions représentatif de la différence de position entre le pixel de l'image I₁ et le pixel associé de l'image I₂ se rapportant au même point physique de la scène filmée.

Une estimation de mouvement est utile dans les domaines du traitement de l'image nécessitant la connaissance des mouvements ou des disparités entre deux images. On peut citer, à titre d'exemples, les domaines d'applications suivants:
- la compression d'images : le procédé d'estimation est utilisé pour limiter la quantité de données pour coder une image, les images étant définies les une par rapport aux autres ;
- la compression de données dans des espaces de dimension supérieure à 2 ;
- le codage vidéo : le champ de mouvement défini à partir d'images déjà décodées est alors utilisé pour la prédiction de l'image suivante;
- l'imagerie médicale : le procédé d'estimation du mouvement entre deux images est utilisé pour faire une analyse de mouvement du coeur par exemple;
- la télésurveillance : le procédé peut servir au contrôle du trafic routier;
- la reconstruction tridimensionnelle à partir d'images multi-vues : le procédé est utilisé pour estimer les disparités entre les différentes vues.

Pour obtenir un tel champ de mouvement, il est connu de décomposer l'image en éléments finis. Ces éléments finis qui peuvent être par exemple des triangles ou des quadrangles, sont déterminés par un maillage dont les noeuds correspondent aux sommets des éléments finis. Un vecteur déplacement est calculé pour chaque noeud du maillage. Puis, par le biais d'une fonction d'interpolation, on peut en déduire un vecteur déplacement pour chaque point de l'image considérée. Le champ de mouvement est ainsi déterminé par un modèle d'éléments finis, définissant le maillage utilisé pour partitionner l'image en éléments finis et la fonction d'interpolation permettant de calculer le vecteur déplacement en tout point de l'image.

Le maillage utilisé peut être régulier ou non et doit être choisi suffisamment dense pour modéliser au mieux le mouvement entre les deux images sans toutefois nécessiter une quantité de calculs ou de données à transmettre trop importante. Ce choix est effectué une fois pour toutes en début de procédé et ce maillage reste généralement le même tout au long de l'estimation.

Le calcul des vecteurs déplacement des noeuds du maillage peut être effectué selon diverses méthodes. Il existe tout d'abord les méthodes dites de mise en correspondance, ou "matching", consistant à tester un ensemble discret de valeurs possibles de vecteurs déplacement pour chaque noeud du maillage et à retenir les meilleurs vecteurs selon un critère donné. Une seconde méthode dite par transformée consiste à utiliser les propriétés de la transformée de Fourier et de ses extensions afin de convertir le mouvement en un déphasage dans l'espace transformé. Enfin, il existe une troisième méthode dite différentielle permettant de déterminer les vecteurs déplacement par optimisation d'un critère mathématique (par exemple, une erreur quadratique entre l'image et sa valeur prédite avec le champ de mouvement). Cette méthode est la plus utilisée pour l'estimation de mouvement avec modélisation par éléments finis. Une méthode différentielle classique pour l'optimisation des vecteurs déplacement est la méthode de Gauss-Newton. La présente demande concerne plus particulièrement la famille de procédé d'estimation de mouvement utilisant un modèle d'éléments finis et une méthode différentielle pour déterminer le champ de mouvement.

Bien que très répandu, ce type de procédé présente cependant quelques inconvénients. Le maillage choisi en début de procédé peut se révéler inapproprié par rapport au contenu sémantique de l'image, certaines zones de l'image méritant un maillage plus dense et d'autres un maillage plus aéré. Par ailleurs, sous l'effet du champ des vecteurs déplacement des noeuds du maillage, le maillage initial sur l'image de départ, par exemple I2, se transforme en un nouveau maillage sur l'autre image, par exemple I1. Il peut alors se produire des situations pathologiques au niveau du nouveau maillage telles que :
- des retournements d'éléments finis: des éléments finis se retournent et viennent en recouvrir d'autres, détruisant ainsi la propriété de partition du domaine de l'image que doit vérifier tout maillage,
- débordement des noeuds périphériques dû maillage déplacé après application des vecteurs déplacement au-delà du domaine de l'image I1: certains pixels de l'image I2 peuvent être associés à des pixels de l'image I1 situés en dehors du domaine de l'image I1. Ceci n'est pas forcément gênant mais il peut être intéressant de forcer les noeuds périphériques du maillage déplacé à rester dans le domaine de l'image I1.

On connaît de par le document EP-A-0 765 087 un procédé d'estimation de mouvement entre deux images numériques destiné à générer des vecteurs déplacement localisés en correspondance des noeuds d'un maillage. Les vecteurs déplacement sont calculés par une méthode énumérative d'appariement pondérée correspondant aux méthodes de mise en correspondance évoquées précédemment. Sur la base des vecteurs déplacement disponibles, une image estimée est calculée et l'erreur produite est comparée à un seuil. Si l'erreur dépasse le seuil, le même procédé est répété en intégralité en utilisant toutefois un maillage plus fin. Ce procédé est réitéré jusqu'à satisfaire la condition d'erreur. Selon ce procédé, le maillage et les vecteurs déplacement ne sont pas optimisés conjointement sur plusieurs cycles de traitement. Par ailleurs, les valeurs des vecteurs déplacement ne sont pas optimisées de manière globale à chaque cycle de traitement pour obtenir une disposition optimale des noeuds du maillage et des vecteurs déplacement optimaux associés.

Un but de l'invention est de proposer un procédé d'estimation de mouvement dans lequel le maillage est optimisé au cours de l'estimation de manière à obtenir en fin de procédé un maillage adapté au contenu sémantique des images. A cet effet, on prévoit un affinage local des éléments finis durant l'estimation de mouvement.

Un autre but de l'invention est d'améliorer l'efficacité de la méthode de Gauss Newton pour l'optimisation des vecteurs déplacement des noeuds du maillage. A cet effet, on prévoit d'effectuer cette optimisation sur plusieurs niveaux de résolution des images.

Enfin, un autre but de l'invention est de proposer un procédé d'estimation de mouvement permettant d'éviter les situations pathologiques précitées. A cet effet, on prévoit selon l'invention de rajouter, au cours de l'étape d'optimisation des vecteurs déplacement, des contraintes pour éviter de telles situations.

Aussi, l'invention a pour objet un procédé d'estimation du mouvement entre deux images numériques, I₁ et I₂, de luminance Y₁ et Y₂, destiné à générer, pour chaque point de coordonnées x,y de l'image I₂ un vecteur déplacement $\vec{\text{d}}$(x,y)=(dₓ,d_{y}) de manière à former une image Î₂ à partir de l'image I₁, de luminance Ŷ₂(x,y)=Y₁(x-dₓ,y-d_{y}), qui soit une approximation de l'image I₂,
caractérisé en ce qu'il comporte les étapes suivantes:
(a) - définir un modèle d'éléments finis initial comportant un maillage dont les noeuds sont des points de l'image I₂, un vecteur déplacement à chaque noeud dudit maillage, et une formule d'interpolation pour calculer la valeur du vecteur déplacement de chaque point de l'image I₂ à partir des valeurs des vecteurs déplacements des noeuds de la maille à laquelle il appartient,
(b) - optimiser la valeur des vecteurs déplacement du modèle selon une méthode différentielle,
(c) - calculer un écart E entre l'image Î₂ et l'image I₂ pour chaque élément fini ou maille,
(d) - opérer un maillage plus fin sur une fraction discrète de l'ensemble des éléments finis déterminée selon un critère relatif aux écarts E, et attribuer un vecteur déplacement à chaque nouveau noeud de maillage,
(e) - répéter les étapes (b), (c) et (d) sur le modèle d'éléments finis obtenu au terme de l'étape (d) précédente, jusqu'à satisfaire un critère d'arrêt.

Selon un mode de réalisation amélioré, on définit en outre, pour chaque image numérique I₁ et I₂, un ensemble de R images I$\frac{\text{r}}{\text{i}}$ de niveau de résolution r et de luminance Y$\frac{\text{r}}{\text{i}}$ avec r prenant les valeurs (0,...,R-1) et i les valeurs 1 et 2, les images I$\frac{\text{0}}{\text{1}}$ et I$\frac{\text{0}}{\text{2}}$ correspondant aux images numériques I₁ et I₂, et on effectue les étapes (b) à (e) pour chaque niveau de résolution r, à partir du niveau r=R-1 jusqu'au niveau r=0.

Enfin, selon un mode de réalisation préféré, on prévoit rajouter des contraintes sur le déplacement des éléments finis au moment de l'optimisation des vecteurs déplacement de manière à éviter le retournement des éléments finis. Selon un autre mode de réalisation, on prévoit également d'introduire des contraintes pour éviter le débordement du maillage obtenu après application des vecteurs déplacement au-delà du domaine de l'image I1.

D'autres caractéristiques et avantages de l'invention apparaîtront à la lecture de la description détaillée qui suit et qui est faite en référence aux dessins annexés, dans lesquels:
- la figure 1 représente un schéma d'un premier mode de réalisation du procédé d'estimation de mouvement selon l'invention;
- la figure 2 illustre l'étape (d) du procédé de l'invention; et
- la figure 3 représente un schéma d'un mode de réalisation amélioré du procédé d'estimation de mouvement selon l'invention.

On considère deux images numériques I₁ et I₂ de luminance respective Y₁ et Y₂. Le procédé de l'invention consiste à générer, pour chaque point P de coordonnées (x,y) dans l'image I₂, un vecteur déplacement $\vec{\text{d}}$(x,y)=(dₓ,d_{y}). Ce vecteur est défini comme étant le vecteur permettant de construire à partir de l'image I₁, une image Î₂ de luminance Ŷ₂(x,y)=Y₁(x-dₓ,y-d_{y}) qui soit une approximation de I₂. Les déplacements sont ainsi définis de l'image I₁ vers l'image I₂.

Le champ de mouvement recherché est défini par un modèle d'éléments finis. Dans la suite de l'exposé, on considère que les éléments finis sont des triangles sans qu'on puisse y voir une limitation de la portée de la présente demande à cette forme d'éléments finis. Le modèle d'éléments finis comporte par conséquent un maillage triangulaire, des vecteurs déplacement définis aux noeuds du maillage, lesquels noeuds correspondent aux sommets des triangles, et une formule d'interpolation pour calculer le vecteur déplacement des points à l'intérieur des triangles.

La formule d'interpolation utilisée pour calculer le champ de mouvement en tout point du domaine de l'image I₂ est la suivante:
si on considère le point P de coordonnées (x,y) dans l'image I₂ appartenant au triangle e de sommets Pᵢ, Pⱼ et Pₖ de coordonnées respectives (xᵢ,yᵢ), (xⱼ,yⱼ) et (xₖ,yₖ), son vecteur déplacement est égal à 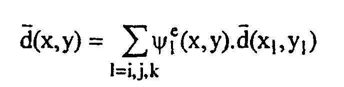
où ψ$\frac{\text{e}}{\text{1}}$ représente une fonction de base associée au triangle e.

Dans le cas d'une interpolation affine, les ψ$\frac{\text{e}}{\text{1}}$(x,y) représentent les coordonnées barycentriques du point P dans le triangle e de sommets P₁, P₃, Pₖ. Ces fonctions sont définies par la relation suivante : 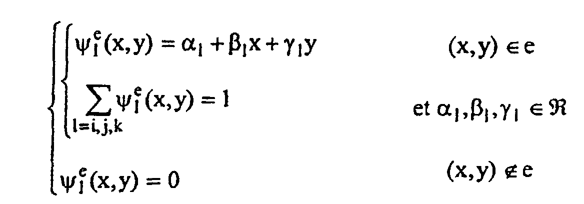 soit$\text{ψ} \frac{\text{e}}{\text{i}} \text{(x,y) =} \frac{{\text{x}}_{\text{j}} {\text{y}}_{\text{k}} {\text{-x}}_{\text{k}} {\text{y}}_{\text{j}} {\text{+(y}}_{\text{j}} {\text{-y}}_{\text{k}} {\text{)x+(x}}_{\text{k}} {\text{x}}_{\text{j}} \text{)y}}{{\text{x}}_{\text{j}} {\text{y}}_{\text{k}} {\text{-x}}_{\text{k}} {\text{y}}_{\text{j}} {\text{+x}}_{\text{k}} {\text{y}}_{\text{i}} {\text{-x}}_{\text{i}} {\text{y}}_{\text{k}} {\text{+x}}_{\text{i}} {\text{y}}_{\text{j}} {\text{-x}}_{\text{j}} {\text{y}}_{\text{i}}}$

Les fonctions affines ψ$\frac{\text{e}}{\text{j}}$(x,y) et ψ$\frac{\text{e}}{\text{k}}$(x,y) se déduisent de la fonction ψ$\frac{\text{e}}{\text{i}}$(x,y) en permutant circulairement les indices i,j,k. On peut également utiliser des modèles d'éléments finis plus évolués, les fonctions ψ pouvant alors être étendues à des polynomes de degré n≥2 mais la formule d'interpolation des vecteurs déplacement fait alors intervenir des dérivées premières, secondes... Un choix divers de modèles d'éléments finis est proposé dans l'ouvrage "Handbook of Numerical Analysis" de P.G Ciarlet et J.L Lions, Volume 2, pp 59-99, Ed. North Holland.

Selon l'invention, au fur et à mesure de l'estimation de mouvement, on optimise la valeur des vecteurs déplacement des noeuds du maillage appelés vecteurs nodaux, et on densifie localement le maillage lorsque c'est nécessaire. Avantageusement, cette optimisation sera effectuée sur plusieurs niveaux de résolution en partant d'un niveau de résolution faible.

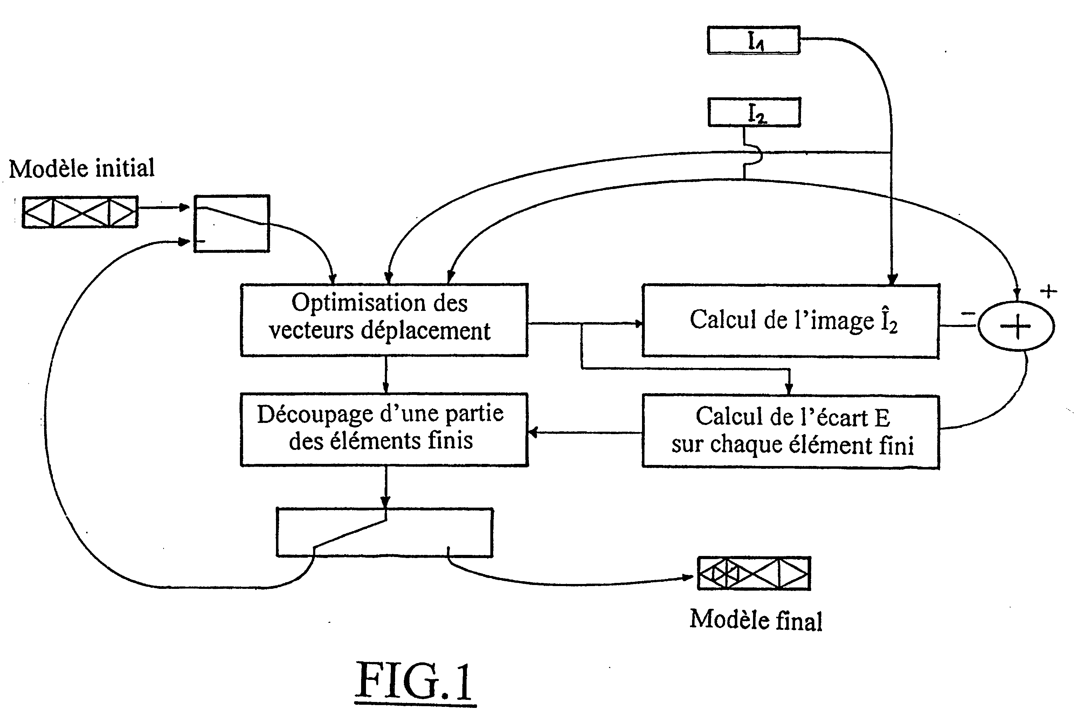

Selon un premier mode de réalisation illustré par la figure 1, le procédé de l'invention comporte cinq étapes référencées (a) à (e).

Selon l'étape (a), on définit un modèle d'éléments finis initial en sélectionnant des points de l'image I₂ selon un maillage triangulaire initial. Les noeuds du maillage représentent les sommets des triangles (éléments finis) du modèle. Ce maillage peut être défini de manière quelconque, par exemple en fonction des besoins de l'application ou de connaissances préalables ou du mouvement déjà calculé entre deux images précédentes de la même séquence vidéo. Si aucune donnée concernant le maillage initial n'est spécifiée, on utilise un maillage régulier en quinconce. Les mailles sont alors des triangles. Un vecteur déplacement de valeur nulle est alors associé à chaque noeud du maillage. La formule d'interpolation définie précédemment est également une donnée du modèle initial.

Selon l'étape (b), on optimise la valeur des vecteurs déplacement du modèle selon une méthode différentielle, par exemple la méthode de Gauss-Newton ou son extension de Marquardt. Cette optimisation peut être soit libre, c'est-à-dire sans contraintes imposées sur les valeurs possibles des vecteurs nodaux, soit avec contraintes. Les vecteurs nodaux désignent les vecteurs déplacement des noeuds du maillage. L'optimisation avec contraintes est directement liée à l'optimisation libre et fait l'objet d'un mode de réalisation développé plus loin.

La technique d'optimisation libre employée ici exploite les caractéristiques intéressantes de la méthode de Gauss-Newton (convergence rapide de l'optimum) et de la méthode du gradient avec pas adaptatif (convergence globale vers un optimum local) pour résoudre le système linéaire à suivre. Cette technique est une correction itérative des vecteurs déplacement $\vec{\text{d}}$(x,y) permettant d'obtenir dès le départ une approximation grossière du mouvement. Le nombre d'itérations k pour cette optimisation des vecteurs déplacement est soit spécifié par l'utilisateur en début de procédé, soit fonction d'un seuil lié à la variation maximale entre deux valeurs consécutives de vecteurs nodaux pour deux itérations successives. Nous développons ci-après l'extension Marquardt de la méthode d'optimisation de Gauss Newton.

L'expression des corrections δD^{k+1} à l'itération k+1 des vecteurs déplacement selon cette méthode est donnée par le système système linéaire suivant:${\text{D}}^{\text{k+1}} {\text{= D}}^{\text{k}} {\text{-[R}}^{\text{k}} {\text{+α.I}}_{\text{2N}} {\text{]}}^{\text{-1}} {\text{.∇E}}^{\text{k}} {\text{⇔-H.δD}}^{\text{k+1}} {\text{= ∇E}}^{\text{k}}$ avec :
- D^{k+1} une matrice colonne de 2N éléments comprenant les composantes dₓ et d_{y} des vecteurs nodaux à l'itération k+1, N étant le nombre de noeuds du maillage à l'étape courante;
- D^{k} une matrice colonne de 2N éléments comprenant les composantes dₓ et d_{y} des vecteurs nodaux à l'itération k; 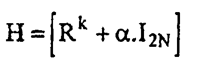
- I_{2N} la matrice identité de dimension 2N;
- 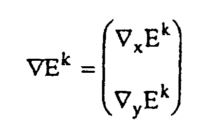 matrice colonne de 2N éléments dont N éléments ∇_{x,n}E^{k} et N éléments ∇_{y,n}E^{k}, n désignant un noeud du maillage et prenant tour à tour les valeurs (1...N); avec 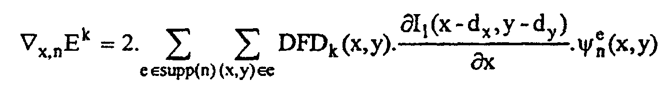 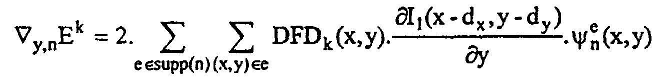 où DFDₖ(x,y) = Y₂(x,y)-Y₁(x-dₓ,y-d_{y}) à l'itération k
   où supp(n) représente le support de la fonction de base ψ$\frac{\text{e}}{\text{n}}$(x,y) attachée au noeud n, c'est-à-dire l'ensemble des triangles ayant le noeud n pour sommet;
- 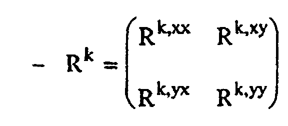 une matrice carrée de dimension 2N
   où 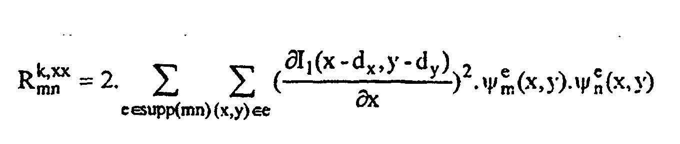 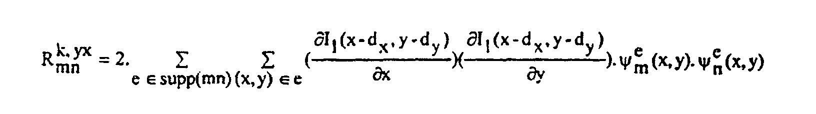 ${\text{R}}_{\text{mn}}^{\text{k,yx}} {\text{= R}}_{\text{mn}}^{\text{k,xy}}$ 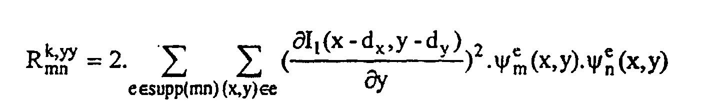 où m et n désignent des noeuds du maillage et prennent tour à tour les valeurs (1...N) et où supp(nm)=supp(n)∩ supp(m).
- ${\text{α = max}}_{\text{n}} {\text{(|∇}}_{\text{n}} {\text{E}}^{\text{k}} {\text{|·∥ψ}}_{\text{n}} \text{∥)}$ où ∥ψₙ∥ est une norme fonctionnelle de ψₙ. Les deux normes les plus intéressantes sont:${\text{∥ψ}}_{\text{n}} {\text{∥ = sup}}_{\text{(x,y)∈sup p(n)}} {\text{|ψ}}_{\text{n}} \text{(x,y)| = 1}$ ou 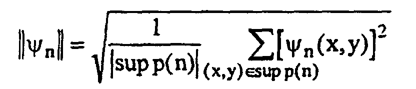 |supp(n)| désigne le cardinal de la région discrète supp(n).

A la fin de cette phase d'optimisation, on dispose de N vecteurs nodaux se rapportant chacun à un noeud du maillage.

Selon un mode de réalisation en variante du gradient adaptatif, on peut également envisager d'utiliser une technique de décomposition dite "LDL^{t} profil" en langage technique pour résoudre le système linéaire (1) et accélérer le traitement. Cette technique est décrite dans l'ouvragé intitulé "Analyse numérique matricielle appliquée à l'art de l'ingénieur" de Théodore Lascaux, Tome 1, pp 295-299, Ed. Masson,1986.

Selon une caractéristique importante de l'invention, le maillage est ensuite affiné localement par division des triangles lorsque l'écart entre l'image Î₂ et l'image I₂ sur ces triangles est trop élevé. C'est pourquoi, selon l'étape (c) du procédé, on calcule un écart E entre l'image Î₂ et l'image I₂ pour chaque triangle e. L'écart E est défini de la manière suivante 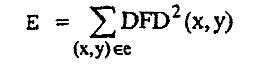 avec${\text{DFD(x,y)= Y}}_{\text{2}} {\text{(x,y)-Y}}_{\text{1}} {\text{(x-d}}_{\text{x}} {\text{,y-d}}_{\text{y}} \text{)}$

Bien entendu, pour calculer cet écart pour chaque triangle, il faut avoir préalablement calculé la valeur des vecteurs déplacement de tous les points de l'image I₂ par interpolation à partir des vecteurs nodaux obtenus au terme de l'étape (b).

Ensuite, conformément à l'étape (d), on affine le maillage sur une fraction discrète de l'ensemble des triangles du modèle. Cette fraction est déterminée selon un critère relatif aux écarts E calculés précédemment à l'étape (c). Pour opérer cet affinage, on peut par exemple classer les triangles du modèle par ordre décroissant de leurs écarts E et subdiviser les X premiers triangles de ce classement en triangles de taille inférieure. X est une fraction prédéterminée du nombre d'éléments finis dans le modèle, par exemple la moitié.

Pour affiner localement le maillage, on peut également prévoir de comparer l'ensemble des écarts E calculés à l'étape (c) à un écart seuil qui est fonction de la taille de l'élément fini considéré, et de subdiviser en éléments finis de taille inférieure les éléments finis dont les écarts E sont supérieurs à l'écart seuil.

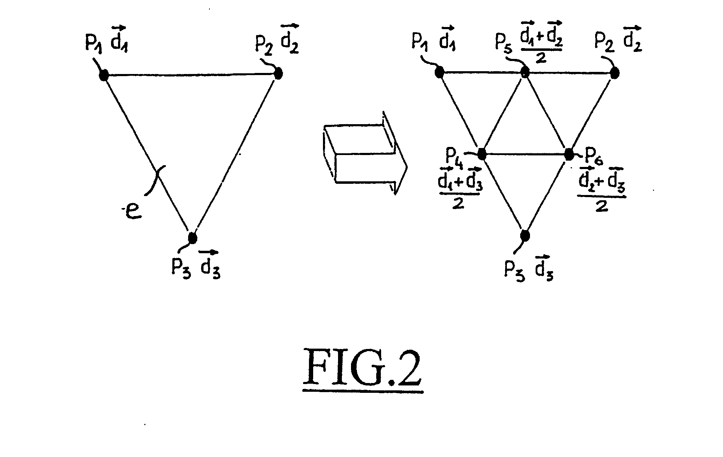

La subdivision d'un triangle e en quatre triangles de taille inférieure est illustré à la figure 2. Le triangle e est défini par les trois sommets P₁, P₂ et P₃ ayant pour vecteurs déplacement respectifs $\vec{\text{d}}$₁, $\vec{\text{d}}$₂, $\vec{\text{d}}$₃. Pour le subdiviser en quatre, on définit trois nouveaux noeuds P₄, P₅ et P₆ au milieu des trois côtés P₁P₃, P₁P₂, P₂P₃ du triangle. On attribue à chacun de ces trois nouveaux noeuds un vecteur déplacement égal à la moyenne des vecteurs déplacement des deux sommets du côté auquel il appartient, respectivement ($\vec{\text{d}}$₁+$\vec{\text{d}}$₃)/2, ($\vec{\text{d}}$₁+$\vec{\text{d}}$₂)/2, ($\vec{\text{d}}$₂+$\vec{\text{d}}$₃)/2. Les triangles adjacents au triangle e ayant pour côté P₁P₂, P₂P₃ ou P₁P₃ sont alors eux-mêmes subdivisés en deux ou trois.

On obtient ainsi un modèle d'éléments finis dont le maillage a été affiné localement. Selon l'étape (e), on répète ensuite les étapes (b), (c) et (d) en prenant comme modèle à optimiser le modèle obtenu au terme de l'étape (d) précédente. Et, on répète cette succession d'étapes jusqu'à satisfaire un critère d'arrêt. Ce critère d'arrêt est par exemple un nombre prédéterminé d'éléments finis à atteindre au terme de l'étape (d).

On peut également prévoir d'arrêter le procédé lorsque les écarts E de l'ensemble des éléments finis du modèle obtenu au terme de l'étape (c) précédente sont inférieurs à un écart seuil.

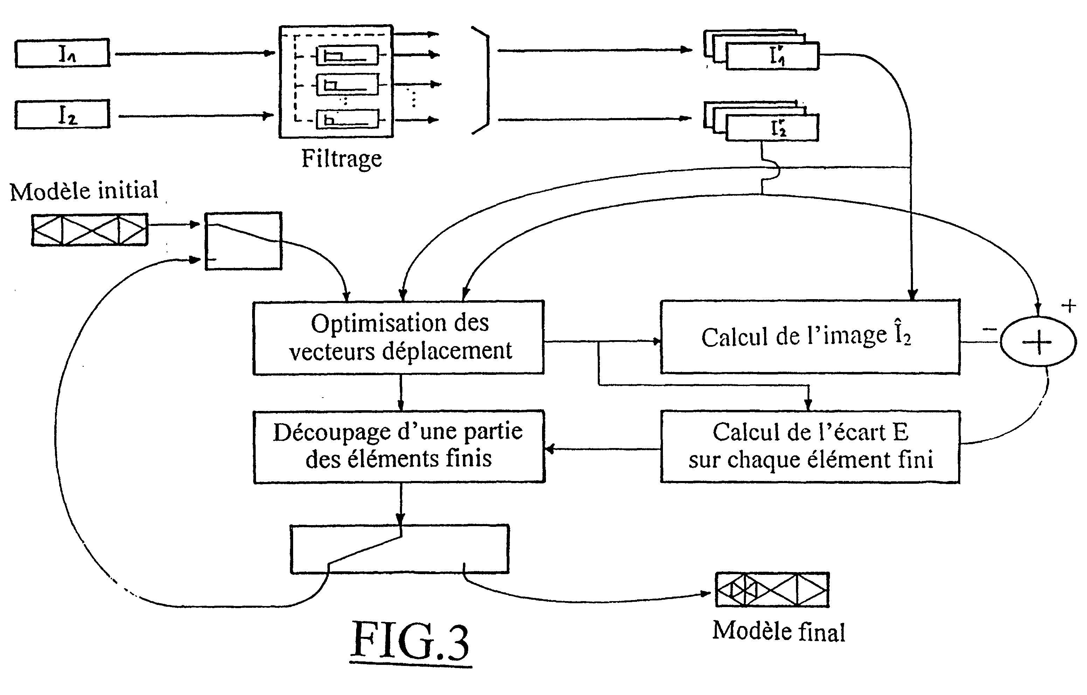

Selon un mode de réalisation amélioré illustré figure 3, on effectue les étapes (b) à (e) en s'appuyant sur plusieurs niveaux de résolution d'images I₁ et I₂. Cette variante a pour but d'améliorer et d'accélérer la convergence des calculs des vecteurs déplacement. Pour ce faire, on définit tout d'abord pour chaque couple d'images numériques I₁ et I₂, un ensemble de R images I$\frac{\text{r}}{\text{i}}$ de niveau de résolution r et de luminance Y$\frac{\text{r}}{\text{i}}$, r prenant tour à tour les valeurs (R-1,R-2,...0) et i les valeurs (1,2) puis on effectue les étapes (b) à (e) pour chaque niveau de résolution r, à partir du niveau de résolution r=R-1 jusqu'au niveau r=0. A noter que les images I$\frac{\text{0}}{\text{1}}$ et I$\frac{\text{0}}{\text{2}}$ correspondent aux images numériques I₁ et I₂.

En pratique, les images I$\frac{\text{r}}{\text{i}}$ sont obtenues par filtrage de l'image Iᵢ au moyen d'un filtre passe-bas linéaire ne laissant passer que 1/2^{r} de la bande spectrale de l'image considérée dans les directions x et y, c'est-à-dire un filtre de réponse impulsionnelle h$\frac{\text{r}}{\text{n}}$ ayant une bande passante BPᵣ=[-1/2^{r+1},1/2^{r+1}] dans l'espace des fréquences normalisées [-1/2,1/2]. L'image I$\frac{\text{r}}{\text{i}}$ est définie par la relation suivante: 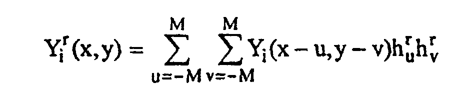 Le filtre utilisé est par exemple une approximation d'un filtre idéal et sa réponse impulsionnelle est définie de la manière suivante:$\text{h} \frac{\text{r}}{\text{n}} \text{=} \frac{{\text{s}}_{\text{n}}^{\text{r}}}{\text{S}}$ avec 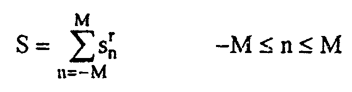 et${\text{s}}_{\text{n}}^{\text{r}} {\text{= 2B.sinc(2πB}}_{\text{r}} \text{n) = 2.B} \frac{{\text{sin2πB}}_{\text{r}} \text{n}}{{\text{2πB}}_{\text{r}} \text{n}}$${\text{B}}_{\text{r}} \text{=} \frac{\text{1}}{{\text{2}}^{\text{r+1}}}$
où B et M sont des entiers naturels
M =+∞ dans le cas idéal.

Comme indiqué précédemment, cette optimisation sur plusieurs niveaux de résolution permet d'améliorer et d'accélérer la convergence des calculs des vecteurs déplacement. A noter que le nombre de niveaux de résolution R choisi peut différer du nombre d'affinages successifs effectués sur le maillage.

Selon un mode de réalisation préféré, on propose de rajouter des contraintes de compacité sur chaque triangle du modèle de manière à empêcher le retournement des triangles.

La compacité d'un triangle de sommets Pᵢ, Pⱼ, Pₖ est définie par la relation suivante:${\text{C(P}}_{\text{i}} {\text{,P}}_{\text{j}} {\text{,P}}_{\text{k}} \text{) =} \frac{{\text{4*π*S(P}}_{\text{i}} {\text{,P}}_{\text{j}} {\text{,P}}_{\text{k}} \text{)}}{{\text{P}}^{\text{2}} {\text{(P}}_{\text{i}} {\text{,P}}_{\text{j}} {\text{,P}}_{\text{k}} \text{)}}$ avec
C(Pᵢ,Pⱼ,Pₖ) ∈ ]0,1[; et
S(Pᵢ,Pⱼ,Pₖ) et P(Pᵢ,Pⱼ,Pₖ) représentant respectivement la surface et la périmètre du triangle (Pᵢ,Pⱼ,Pₖ);

Si on empêche la compacité d'un triangle de tendre vers zéro, on l'empêche ainsi de se retourner. C'est pourquoi, pour éviter les retournements de triangles, chaque triangle doit vérifier la contrainte suivante :${\text{C(P}}_{\text{i}} \text{+} \vec{\text{d}} {\text{}}_{{\text{P}}_{\text{i}}} {\text{P}}_{\text{j}} \text{+} \vec{\text{d}} {\text{}}_{{\text{P}}_{\text{j}}} {\text{,P}}_{\text{k}} \text{+} \vec{\text{d}} {\text{}}_{{\text{P}}_{\text{k}}} {\text{)≥K*C(P}}_{\text{i}} {\text{,P}}_{\text{j}} {\text{,P}}_{\text{k}} \text{)} {\text{⇔ K*C(P}}_{\text{i}} {\text{,P}}_{\text{j}} {\text{,P}}_{\text{k}} {\text{)-C(P}}_{\text{i}} \text{+} \vec{\text{d}} {\text{}}_{{\text{P}}_{\text{i}}} {\text{,P}}_{\text{j}} \text{+} \vec{\text{d}} {\text{}}_{{\text{P}}_{\text{j}}} {\text{,P}}_{\text{k}} \text{+} \vec{\text{d}} {\text{}}_{{\text{P}}_{\text{k}}} \text{) ≤ 0} {\text{⇔ g}}_{\text{e}} \text{(} \vec{\text{D}} {\text{) ≤ 0;e = triangle(P}}_{\text{i}} {\text{,P}}_{\text{j}} {\text{,P}}_{\text{k}} \text{)}$ où K est un paramètre fixant la variation de compacité autorisée et $\vec{\text{D}}$ est le vecteur colonne des vecteurs déplacement des noeuds du modèle.

Selon l'invention, on associe une telle contrainte à chaque triangle au moment de l'optimisation des vecteurs déplacement. L'étape d'optimisation des vecteurs déplacement revient à un système du type: 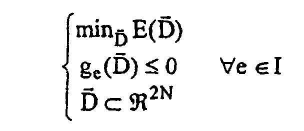 où
- E($\vec{\text{D}}$) représente l'écart entre l'image I₂ et l'image prédite Î₂;
- gₑ est une contrainte liée au triangle e;
- I est l'ensemble des triangles du maillage.

Pour résoudre les problèmes d'optimisation sous contraintes, on prévoit d'utiliser la technique dite du Lagrangien augmenté. Cette technique est décrite dans l'ouvrage intitulé "Théories et algorithmes" de Michel Minoux, Tome 1, pp 257-260, Dunod 1983. Cette technique combine deux techniques d'optimisation: l'optimisation Lagrangienne et l'optimisation de pénalités extérieures.

Selon cette technique, résoudre le système précédent revient à résoudre le système sans contraintes suivant: 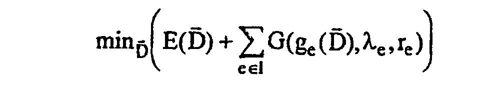 où
rₑ est un élément de pénalité,
λₑ est un multiplicateur de Lagrange G est un Lagrangien augmenté déterminé par la relation:

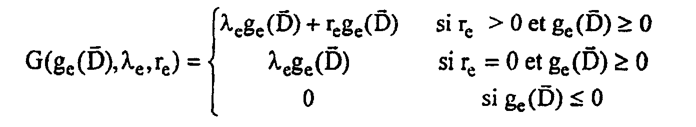

Les contraintes gₑ ont été préalablement linéarisées par la formule de Taylor à l'ordre 1 :

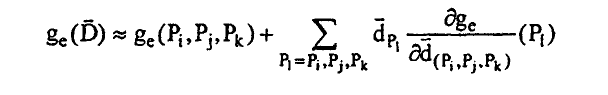

La méthode d'optimisation est alors la suivante:
- on initialise k=0
- on pose λ =0 et r=0, λ∈ 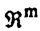 et r ∈ 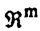 , et m désigne le nombre de triangles du modèle
- on détermine ensuite le minimum δD^{k+1}(λ,r) tel que, à l'itération k+1,${\text{-H.δD}}^{\text{k+1}} {\text{=∇E}}^{\text{k}} {\text{-C}}^{\text{t}} \text{γ}$ où
   γ^{t}=(λ ,r) ,C^{t} est une matrice de 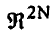 X 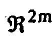
   C^{t}γ forme une matrice des contraintes linéarisées ayant pour coefficients les valeurs suivantes: 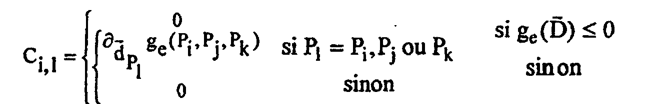 où e représente le triangle de sommets Pᵢ, Pⱼ, Pₖ.

   Puis, on effectue la mise à jour de λ par l'algorithme d'Uzawa et on augmente r puis on répète l'opération précédente jusqu'à ce que toutes les contraintes soient vérifiées. On passe ensuite à l'itération k+2. A noter que l'algorithme d'Uzawa est développé en détail dans l'ouvrage intitulé "Théories et algorithmes" de Michel Minoux, Tome 1, Dunod 1983.
   Selon un dernier mode de réalisation, on peut également prévoir d'introduire des contraintes pour éviter le débordement du maillage obtenu après application des vecteurs déplacement au-delà du domaine de l'image I1. Ce mode consiste à forcer les noeuds périphériques du maillage à rester sur les bords de l'image après application des vecteurs déplacement. Pour celà, les composantes abscisses δD^{k+1} pour les noeuds périphériques sur les bords gauche et droit de l'image I2 sont annulées à chaque itération k. De même, les composantes ordonnées δD^{k+1} pour les bords haut et bas de l'image 12 sont annulées à chaque itération k.
   Dans le cas d'une application de codage, on prévoit d'associer au maillage un arbre partiellement quaternaire. A chaque subdivision du maillage (étape d), on ajoute un niveau supplémentaire dans l'arbre. Chaque niveau de l'arbre représente alors un niveau de maillage et chaque noeud de l'arbre représente un triangle du niveau de maillage correspondant. Le train binaire généré pendant l'étape de codage est obtenu par lecture de l'arbre niveau par niveau. Dans ce train binaire, les vecteurs déplacement associés à chaque noeud de l'arbre sont avantageusement codés de manière différentielle par rapport aux vecteurs déplacement de leur noeud père lorsque ce dernier existe et sont ordonnancés niveau par niveau. L'étape de décodage correspondante consiste à regénérer cet arbre à partir du train binaire reçu en provenance du codeur.

## Revendications

1. Procédé d'estimation du mouvement entre deux images numériques, I₁ et I₂, de luminance Y₁ et Y₂, destiné à générer, pour chaque point de coordonnées x,y de l'image I₂ un vecteur déplacement $\vec{\text{d}}$(x,y)=(dₓ,d_{y}) de manière à former une image Î₂ à partir de l'image I₁, de luminance Ŷ₂(x,y)=Y₁(x-dₓ,y-d_{y}), qui soit une approximation de l'image I₂, comportant l'étape de:
(a) - définir un modèle d'éléments finis initial comportant un maillage dont les noeuds sont des points de l'image I₂, un vecteur déplacement à chaque noeud dudit maillage, et une formule d'interpolation pour calculer la valeur du vecteur déplacement de chaque point de l'image I₂ à partir des valeurs des vecteurs déplacements des noeuds de la maille à laquelle il appartient,
**caractérisé en ce qu'**il comporte en outre les étapes suivantes :
(b) - optimiser de manière globale les valeurs de l'ensemble des vecteurs déplacement du modèle selon une méthode différentielle,
(c) - calculer un écart E entre l'image Î₂ et l'image I₂ pour chaque élément fini ou maille,
(d) - opérer un maillage plus fin sur une fraction discrète de l'ensemble des éléments finis déterminée selon un critère relatif aux écarts E, et attribuer un vecteur déplacement à chaque nouveau noeud de maillage,
(e) - répéter les étapes (b), (c) et (d) sur le modèle d'éléments finis obtenu au terme de l'étape (d) précédente, jusqu'à satisfaire un critère d'arrêt.

2. Procédé selon la revendication 1, **caractérisé en ce que**, pour opérer un maillage plus fin sur une fraction discrète de l'ensemble des éléments finis à l'étape (d), on classe ledit ensemble des éléments finis par ordre décroissant de leurs écarts E et on subdivise les X premiers éléments finis de ce classement en éléments finis de taille inférieure, X représentant une fraction prédéterminée du nombre des éléments finis de l'ensemble.

3. Procédé selon la revendication 1, **caractérisé en ce que**, pour opérer un maillage plus fin sur une fraction discrète de l'ensemble des éléments finis à l'étape (d), on compare l'ensemble des écarts E calculés à l'étape (c) à un écart seuil qui est fonction de la taille de l'élément fini considéré, et on subdivise en éléments finis de taille inférieure les éléments finis dont les écarts E sont supérieurs à l'écart seuil.

4. Procédé selon l'une des revendications 1 à 3, **caractérisé en ce que** ledit critère d'arrêt est un nombre prédéterminé d'éléments finis constituant le modèle d'éléments finis, à atteindre au terme de l'étape (d).

5. Procédé selon l'une des revendications 1 à 3, **caractérisé en ce que** ledit critère d'arrêt de l'étape (e) est satisfait lorsque les écarts E de l'ensemble des éléments finis du modèle obtenu au terme de l'étape (d) précédente sont inférieurs à un écart seuil fonction de la taille de l'éléments fini considéré.

6. Procédé selon l'une des revendications 1 à 5, **caractérisé en ce qu'**on définit en outre, pour chaque image numérique I₁ et I₂, un ensemble de R images I$\frac{\text{r}}{\text{i}}$ de niveau de résolution r et de luminance Y$\frac{\text{r}}{\text{i}}$ avec r prenant les valeurs (0,...,R-1) et i les valeurs 1 et 2, les images I$\frac{\text{0}}{\text{1}}$ et I$\frac{\text{0}}{\text{2}}$ correspondant aux images numériques I₁ et I₂,
et **en ce qu'**on effectue les étapes (b) à (e) pour chaque niveau de résolution r, à partir du niveau r=R-1 jusqu'au niveau r=0.

7. Procédé selon la revendication 6, **caractérisé en ce que** les ensembles de R images de niveau de résolution r sont obtenus par filtrage des images I1 et I2 suivant les deux directions x et y au moyen d'un filtre passe-bas de réponse impulsionnelle h$\frac{\text{r}}{\text{n}}$, chaque image I$\frac{\text{R}}{\text{i}}$ étant définie par la relation suivante: 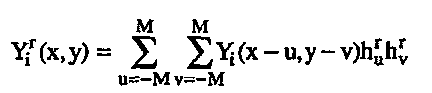 avec M entier naturel.

8. Procédé selon la revendication 7, **caractérisé en ce que** la reponse impulsionnelle h$\frac{\text{r}}{\text{n}}$ est définie de la manière suivante:${\text{h}}_{\text{n}}^{\text{r}} \text{=} \frac{{\text{S}}_{\text{n}}^{\text{r}}}{\text{S}}$ avec${\text{s}}_{\text{n}}^{\text{r}} {\text{= 2B,sinc(2πB}}_{\text{r}} \text{n) = 2B} \frac{{\text{sin2πB}}_{\text{r}} \text{n}}{{\text{2πB}}_{\text{r}} \text{n}}$ 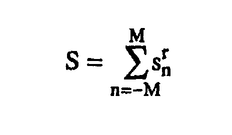 ${\text{B}}_{\text{r}} \text{=} \frac{\text{1}}{{\text{2}}^{\text{r+1}}}$ B un entier naturel.

9. Procédé selon l'une des revendications précédentes, **caractérisé en ce que** les vecteurs déplacement initiaux sont des vecteurs nuls.

10. Procédé selon l'une des revendications précédentes, **caractérisé en ce que** l'écart E entre l'image Î₂ et l'image I₂ pour chaque élément fini e est défini par la relation suivante: 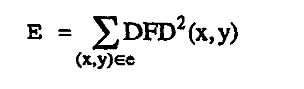 où DFD(x,y) = Y₂(x,y)-Y₁(x-dₓ,y-d_{y})

11. Procédé selon l'une des revendications précédentes, **caractérisé en ce que** la formule d'interpolation pour calculer la valeur du vecteur déplacement d'un point P de coordonnées (x,y) dans l'image I₂ appartenant à l'élément fini e de sommets Pᵢ, Pⱼ et Pₖ de coordonnées respectives (xᵢ,yᵢ),(xⱼ,yⱼ) et (xₖ,yₖ) est la suivante: 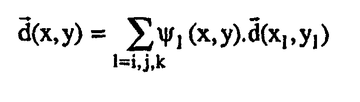 où ψ₁ est une fonction de la forme

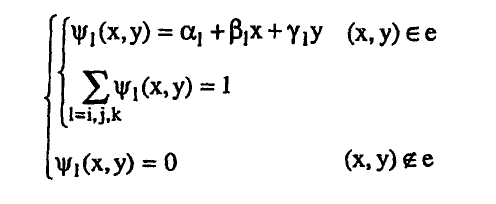

12. Procédé selon l'une des revendications 1 à 11, **caractérisé en ce que** la méthode différentielle d'optimisation des vecteurs déplacement est la méthode de Gauss-Newton.

13. Procédé selon l'une des revendications 1 à 11, **caractérisé en ce que** la méthode différentielle d'optimisation des vecteurs déplacement est l'extension de Marquardt de la méthode de Gauss-Newton.

14. Procédé selon l'une des revendications précédentes, **caractérisé en ce qu'**une contrainte de compacité est imposée sur chaque élément fini au moment de l'optimisation des vecteurs déplacement du modèle d'éléments finis, ladite contrainte consistant à empêcher la compacité de chaque élément fini de tendre vers zéro.

15. Procédé selon la revendication 14, **caractérisé en ce que** la contrainte de compacité sur un élément fini e de sommets Pᵢ, Pⱼ, Pₖ et de compacité C(Pᵢ,Pⱼ,Pₖ) est définie par la relation suivante:${\text{C(P}}_{\text{i}} \text{+} \vec{\text{d}} {\text{}}_{{\text{P}}_{\text{i}}} {\text{,P}}_{\text{j}} \text{+} \vec{\text{d}} {\text{}}_{{\text{P}}_{\text{j}}} {\text{,P}}_{\text{k}} \text{+} \vec{\text{d}} {\text{}}_{{\text{P}}_{\text{k}}} {\text{) ≥ K*C(P}}_{\text{i}} {\text{,P}}_{\text{j}} {\text{,P}}_{\text{k}} \text{)}$ où $\vec{\text{d}}$_{Pᵢ},$\vec{\text{d}}$_{Pⱼ} et $\vec{\text{d}}$_{Pₖ} représentent les vecteurs déplacement des sommets Pᵢ, Pⱼ, Pₖ au cours de l'étape d'optimisation,
et K est un paramètre de compacité.

16. Procédé selon la revendication 14 ou 15, **caractérisé en ce que** l'optimisation des vecteurs déplacement sous contraintes sur les éléments finis est résolue par la technique dite du Lagrangien augmenté.

17. Procédé selon la revendication 16, **caractérisé en ce que** les contraintes sont employées sous une forme linéarisée dans la technique dite du Lagrangien augmenté.

18. Procédé selon l'une des revendications 12, 13 ou 17, **caractérisé en ce que** les méthodes d'optimisation des vecteurs déplacement utilisent une technique LDL^{t} profil.

19. Application du procédé d'estimation de mouvement entre deux images numériques selon l'une des revendications 1 à 18 pour le codage d'images **caractérisée en ce que** la subdivision fractionnaire du maillage opérée à l'étape d) du procédé d'estimation de mouvement est associée à un arbre partiellement quaternaire dans lequel chaque niveau représente un niveau de maillage et chaque noeud représente un triangle du niveau donné, et **en ce qu'**est généré un train binaire décrivant le dit arbre.

20. Application du procédé d'estimation de mouvement entre deux images numériques selon la revendication 19 **caractérisée en ce que** les vecteurs déplacement associés à chaque noeud dudit arbre sont codés de manière différentielle par rapport aux vecteurs déplacement de leur noeud père lorsque ce dernier existe et sont ordonnancés dans ledit train binaire suivant un parcours en largeur dudit arbre.

21. Application du procédé d'estimation de mouvement entre deux images numériques selon l'une des revendications 1 à 18 pour le décodage d'images **caractérisée en ce que** la subdivision fractionnaire du maillage opérée à l'étape d) du procédé d'estimation de mouvement est associée à un arbre partiellement quaternaire dans lequel chaque niveau représente un niveau de maillage et chaque noeud représente un triangle du niveau donné, et **en ce que** ledit arbre est généré à partir d'un train binaire de données codées décrivant ledit arbre.

22. Application du procédé d'estimation de mouvement entre deux images numériques selon la revendication 21, **caractérisée en ce que** les données codées se rapportant à un même niveau de l'arbre sont regroupées ensemble dans le train binaire de manière à générer l'arbre niveau par niveau au fur et à mesure de la lecture du train.

23. Application du procédé selon l'une des revendications précédentes à au moins un des domaines appartenant au groupe des domaines suivants :
- compression de séquences d'images ; et
- compression d'images dans des espaces de dimension supérieure à 2.

## Patentansprüche

1. Verfahren zum Abschätzen einer Bewegung zwischen zwei digitalen Bildern I₁ und I₂ mit der Luminanz Y₁ und Y₂, um für jeden Koordinatenpunkt x, y des Bildes I₂ einen Verschiebungsvektor $\vec{\text{d}}$(x, y) = (dₓ, d_{y}) derart zu erzeugen, dass sich ein Bild Î₂ aus dem Bild I₁ mit einer Luminanz Ŷ₂(x, y) = Y₁(x-dₓ, y-d_{y}) ergibt, als Approximation des Bildes I₂ mit den Schritten:
(a) Definieren eines Ausgangsmodells mit finiten Elementen mit einer Vernetzung, bei der die Knoten Punkte in dem Bild I₂ sind, eines Verschiebungsvektors zu jedem Knoten in der Vernetzung und einer Interpolationsformel zum Berechnen des Wertes des Verschiebungsvektors bei jedem Punkt des Bildes I₂ aus den Werten der Verschiebungsvektoren der Knoten des dazugehörigen Netzes,
**dadurch gekennzeichnet, dass** es außerdem die folgenden Schritte umfasst:
(b) globale Optimierung der Werte des Satzes von Verschiebungsvektoren des Modells durch Differenzieren,
(c) Berechnen eines Abstandes E zwischen dem Bild Î₂ und dem Bild I₂ bei jedem finiten Element oder Netz,
(d) feineres Vernetzen auf einem diskreten Abschnitt des Satzes von finiten Elementen, der anhand eines Kriteriums mit Bezug auf die Abstände E festgelegt wurde, und Zuordnen eines Verschiebungsvektors zu jedem neuen Knoten der Vernetzung,
(e) Wiederholen der Schritte (b), (c) und (d) auf dem Modell mit finiten Elementen, das sich nach dem vorangehenden Schritt (d) ergibt, bis ein Abbruchkriterium befriedigt wird.

2. Verfahren nach Anspruch 1, **dadurch gekennzeichnet, dass** zum Feinvernetzen eines diskreten Abschnittes des Satzes von finiten Elementen in Schritt (d) der Satz von finiten Elementen in Reihenfolge ihrer abnehmenden Abstände E klassifiziert wird und die X ersten finiten Elemente der Klassifizierung in finite Elemente kleinerer Größe unterteilt werden, wobei X einen vorgegebenen Abschnitt der Anzahl von finiten Elementen des Satzes darstellt.

3. Verfahren nach Anspruch 1, **dadurch gekennzeichnet, dass** zum Feinvernetzen eines diskreten Abschnittes des Satzes von finiten Elementen in Schritt (d) der Satz mit in Schritt (c) berechneten Abständen E mit einem Abstandsschwellenwert verglichen wird, der von der Größe des betrachteten finiten Elements abhängt, und die finiten Elementen in finite Elemente kleinerer Größe unterteilt werden, bei denen die Abstände E größer als der Abstandsschwellenwert ist.

4. Verfahren nach einem der Ansprüche 1 bis 3, **dadurch gekennzeichnet, dass** das Abbruchkriterium eine vorgegebene Anzahl von finiten Elementen ist, worauf das Modell mit finiten Elementen beruht, das am Ende von Schritt (d) erreicht werden soll.

5. Verfahren nach einem der Ansprüche 1 bis 3, **dadurch gekennzeichnet, dass** das Abbruchkriterium im Schritt (e) befriedigt wird, wenn die Abstände E des Satzes von finiten Elementen des Modells am Ende von dem vorangehenden Schritt (d) in Abhängigkeit von der Größe des betrachteten finiten Elements kleiner als ein Abstandsschwellenwert sind.

6. Verfahren nach einem der Ansprüche 1 bis 5, **dadurch gekennzeichnet, dass** für jedes digitale Bild I₁ und I₂ außerdem ein Satz von R Bildern *I*$\frac{\text{r}}{\text{i}}$ des Auflösungsgrades r und der Luminanz *Y*$\frac{\text{r}}{\text{i}}$ mit r aus den Werten (0, ..., R-1) und i den Werten 1 und 2 definiert wird, wobei die Bilder *I*$\frac{\text{0}}{\text{1}}$ und *I*$\frac{\text{0}}{\text{2}}$ den digitalen Bildern I₁ und I₂ entsprechen,
und dass die Schritte (b) bis (e) für jeden Auflösungsgrad r zwischen r = R-1 und r = 0 durchgeführt werden.

7. Verfahren nach Anspruch 6, **dadurch gekennzeichnet, dass** die Sätze der R Bilder mit dem Auflösungsgrad r durch Filterung der Bilder I₁ und I₂ in den beiden Richtungen x und y mit einem Tiefpassfilter mit Impulsantwort *h*$\frac{\text{r}}{\text{n}}$ erzeugt werden, wobei jedes Bild *I*$\frac{\text{r}}{\text{i}}$ definiert wird durch die folgende Beziehung: 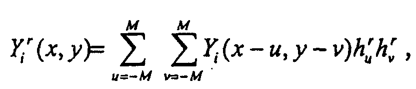 wobei M eine natürliche ganze Zahl ist.

8. Verfahren nach Anspruch 7, **dadurch gekennzeichnet, dass** die Impulsantwort *h*$\frac{\text{r}}{\text{n}}$ definiert ist als${\text{h}}_{\text{n}}^{\text{r}} \text{=} \frac{{\text{s}}_{\text{n}}^{\text{r}}}{\text{S}} \text{,}$ wobei${\text{s}}_{\text{n}}^{\text{r}} \text{= 2} \text{B} \text{.sin} \text{c} {\text{(2πB}}_{\text{r}} \text{n} \text{)=2} \text{B} \frac{\text{sin 2π} {\text{B}}_{\text{r}} \text{n}}{\text{2π} {\text{B}}_{\text{r}} \text{n}} \text{,}$ 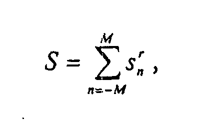 ${\text{B}}_{\text{r}} \text{=} \frac{\text{1}}{{\text{2}}^{\text{r}} {\text{}}^{\text{+1}}} \text{,}$ wobei B eine natürliche ganze Zahl ist.

9. Verfahren nach einem der vorangehenden Ansprüche, **dadurch gekennzeichnet, dass** die ursprünglichen Verschiebungsvektoren Null-Vektoren sind.

10. Verfahren nach einem der vorangehenden Ansprüche, **dadurch gekennzeichnet, dass** der Abstand E zwischen dem Bild Î₂ und dem Bild I₂ bei jedem finiten Element e definiert ist durch: 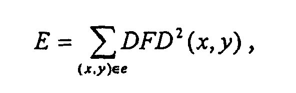 wobei$\text{DFD} \text{(} \text{x,y} \text{)} {\text{= Y}}_{\text{2}} \text{(} \text{x,y} \text{)} {\text{-Y}}_{\text{1}} \text{(} {\text{x-d}}_{\text{x}} {\text{,y -d}}_{\text{y}} \text{)}$ ist.

11. Verfahren nach einem der vorangehenden Ansprüche, **dadurch gekennzeichnet, dass** die Interpolationsformel zum Berechnen des Wertes des Verschiebungsvektors an einem Punkt P mit den Koordinaten (x, y) in dem Bild I₂ zu dem finiten Element e mit den Ecken Pᵢ, Pⱼ und Pₖ mit den jeweiligen Koordinaten (xᵢ, yᵢ), (xⱼ, yⱼ) und (xₖ, yₖ) gegeben ist durch 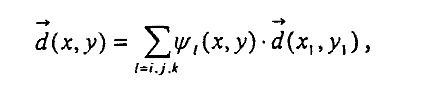 wobei Ψ₁ eine Funktion der Form 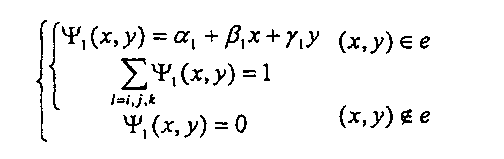 ist.

12. Verfahren nach einem der Ansprüche 1 bis 11, **dadurch gekennzeichnet, dass** das differenzielle Verfahren zum Optimieren der Verschiebungsvektoren das Gauss-Newton-Verfahren ist.

13. Verfahren nach einem der Ansprüche 1 bis 11, **dadurch gekennzeichnet, dass** das differenzielle Verfahren zum Optimieren der Verschiebungsvektoren die Marquardt-Erweiterung des Gauss-Newton-Verfahrens ist.

14. Verfahren nach einem der vorangehenden Ansprüche, **dadurch gekennzeichnet, dass** eine Kompaktheitsbedingung für jedes finite Element bei der Optimierung der Verschiebungsvektoren des Modells mit finiten Elementen eingehalten wird, wobei die Bedingung bedeutet, dass die Kompaktheit jedes finiten Elements nicht gegen Null streben darf.

15. Verfahren nach Anspruch 14, **dadurch gekennzeichnet, dass** die Kompaktheitsbedingung für ein finites Element e mit den Ecken Pᵢ, Pⱼ, Pₖ und der Kompaktheit C(Pᵢ,Pⱼ,Pₖ) definiert ist durch:$\text{C} \text{(} {\text{P}}_{\text{1}} \text{+} {\vec{\text{d}}}_{\text{Pi}} \text{,} {\text{P}}_{\text{j}} \text{+} {\vec{\text{d}}}_{\text{Pj}} \text{,} {\text{P}}_{\text{k}} \text{+} {\vec{\text{d}}}_{\text{Pk}} \text{) ≥} \text{K} \text{·} \text{C} \text{(} {\text{P}}_{\text{i}} \text{,} {\text{P}}_{\text{j}} \text{,} {\text{P}}_{\text{k}} \text{),}$ wobei
$\vec{\text{d}}$_{Pi}, $\vec{\text{d}}$_{Pj} und $\vec{\text{d}}$_{*Pk*} die Verschiebungsvektoren mit den Ecken Pᵢ, Pⱼ, Pₖ im Verlauf der Optimierung darstellen und K ein Kompaktheitsparameter ist.

16. Verfahren nach Anspruch 14 oder 15, **dadurch gekennzeichnet, dass** die Optimierung der Verschiebungsvektoren unter den Bedingungen bezüglich der finiten Elemente mit Hilfe des verbesserten Lagrange-Algorithmus gelöst wird.

17. Verfahren nach Anspruch 16, **dadurch gekennzeichnet, dass** die Bedingungen in linearisierter Form in dem verbesserten Lagrange-Algorithmus verwendet werden.

18. Verfahren nach einem der Ansprüche 12, 13 oder 17, **dadurch gekennzeichnet, dass** die Optimierungsverfahren der Verschiebungsvektoren auf einem LDL-Profil-Algorithmus beruhen.

19. Anwendung des Verfahrens zum Abschätzen der Bewegung zwischen zwei digitalen Bildern nach einem der Ansprüche 1 bis 18 für die Codierung von Bildern, **dadurch gekennzeichnet, dass** die Abschnittsunterteilung der Vernetzung in Schritt (d) des Verfahrens zum Abschätzen der Bewegung ein partiell quarternärer Baum ist, in dem jede dargestellte Ebene eine Vernetzungsebene ist und jeder dargestellte Knoten ein Dreieck der gegebenen Ebene ist, und dass eine Binärfolge erzeugt wird, die den Baum beschreibt.

20. Anwendung des Verfahrens zum Abschätzen der Bewegung zwischen zwei digitalen Bildern nach Anspruch 19, **dadurch gekennzeichnet, dass** die Verschiebungsvektoren zu jedem Knoten des Baumes durch Differenzierung in Bezug auf die Verschiebungsvektoren ihres Mutterknotens codiert werden, wenn letzterer existiert, und in der Binärfolge bei einem Durchlauf in der Breite des Baumes angewiesen werden.

21. Anwendung des Verfahrens zum Abschätzen der Bewegung zwischen zwei digitalen Bildern nach einem der Ansprüche 1 bis 18 zum Decodieren von Bildern, **dadurch gekennzeichnet, dass** die Abschnittsunterteilung der Vernetzung in Schritt (d) des Verfahrens zum Abschätzen der Bewegung zu einem partiell quarternären Baum gehört, bei dem jede dargestellte Ebene eine Vernetzungsebene ist und jeder dargestellte Knoten ein Dreieck der gegebenen Ebene ist, und dass der Baum aus einer Binärfolge von codierten Daten erzeugt wird, wodurch der Baum beschrieben wird.

22. Anwendung des Verfahrens zum Abschätzen der Bewegung zwischen zwei digitalen Bildern nach Anspruch 21, **dadurch gekennzeichnet, dass** die codierten Daten sich auf eine gleiche Ebene des Baumes beziehen und zusammengefasst werden in der Binärfolge, so dass der Baum je nach Auslesen der Folge Ebene für Ebene dargestellt wird.

23. Anwendung des Verfahrens nach einem der vorangehenden Ansprüche auf wenigstens eines der Gebiete, die zu der folgenden Gruppe von Gebieten gehören:
Kompression von Bildfolgen;
Kompression von Bildern in Räumen mit mehr als zwei Dimensionen.

## Claims

1. Method for estimating motion between two digital images, I₁ and I₂, with brightness Y₁ and Y₂, for generating, for each point of coordinates x,y of image I₂ a motion vector $\overline{\text{d}}$(x,y)=(dₓ,d_{y}) so as to form an image Î₂ from image I₁, with brightness Ŷ₂(x,y)=Y₁(x-dₓ,y-d_{y}), which is an approximation of image I₂, consisting in the step of:
(a) - defining an initial finite element model comprising a mesh whose nodes are points of the image I₂, a motion vector at each node of the said mesh, and an interpolation formula for calculating the value of the motion vector of each point of the image I₂ from the motion vector values of the nodes of the mesh to which it belongs,
**characterized in that** it further includes the following steps:
(b) - globally optimizing the values of the set of motion vectors of the model according to a differential method,
(c) - calculating a variation E between the image Î₂ and the image I₂ for each finite element or mesh,
(d) - using a finer mesh on a discrete fraction of the set of finite elements determined according to a criterion relating to the variations E, and assigning a motion vector to each mesh node.
(e) - repeating steps (b), (c) and (d) on the finite element model obtained at the end of the previous step (d), until a stop criterion is satisfied.

2. Method according to Claim 1, **characterized in that**, for using a finer mesh on a discrete fraction of the set of finite elements in step (d), the said set of finite elements is classified in descending order of their variations E and the X first finite elements of this classification are subdivided into smaller finite elements, X representing a predetermined fraction of the number of finite elements of the set.

3. Method according to Claim 1, **characterized in that**, for using a finer mesh on a discrete fraction of the set of finite elements in step (d), the set of variations E calculated in step (c) is compared to a threshold variation which is a function of the size of the finite element considered, and the finite elements whose variations E are greater than the threshold variation are subdivided into smaller finite elements.

4. Method according to one of Claims 1 to 3, **characterized in that** the said stop criterion is a predetermined number of finite elements forming the finite element model, to be attained at the end of step (d).

5. Method according to one of Claims 1 to 3, **characterized in that** the said stop criterion of step (e) is satisfied when the variations E of the set of finite elements of the model obtained at the end of the preceding step (d) are less than a threshold variation that is a function of the size of the finite elements considered.

6. Method according to one of Claims 1 to 5, **characterized in that**, for each digital image I₁ and I₂, a set of R images I$\frac{\text{r}}{\text{i}}$ with a resolution level r and brightness Y$\frac{\text{r}}{\text{i}}$ is further defined, with r taking the values (0,...,R-1) and i the values 1 and 2, the images I$\frac{\text{0}}{\text{1}}$ and I$\frac{\text{0}}{\text{2}}$ corresponding to the digital images I₁ and I₂, and **in that** steps (b) to (e) are carried out for each resolution level r, from the level r=R-1 up to the level r=0.

7. Method according to Claim 6, **characterized in that** the sets of R images of resolution level r are obtained by filtering images I1 and I2 along both x and y directions by means of a low pass filter with an impulse response h$\frac{\text{r}}{\text{n}}$, each image I$\frac{\text{r}}{\text{i}}$ being defined by the following relationship: 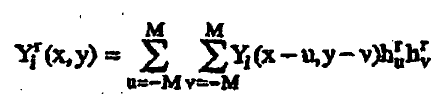 with M [being a] natural number.

8. Method according to Claim 7, **characterized in that** the impulse response h$\frac{\text{r}}{\text{n}}$ is defined in the following way:${\text{h}}_{\text{n}}^{\text{r}} \text{=} \frac{{\text{s}}_{\text{n}}^{\text{r}}}{\text{S}}$ with${\text{s}}_{\text{n}}^{\text{r}} {\text{= 2B.sinc(2πB}}_{\text{r}} \text{n)=2B} \frac{{\text{sin 2πB}}_{\text{r}} \text{n}}{{\text{2πB}}_{\text{r}} \text{n}} \text{,}$ 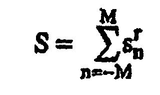 ${\text{B}}_{\text{r}} \text{=} \frac{\text{1}}{{\text{2}}^{\text{r+1}}}$ B [being] a natural number.

9. Method according to one of the preceding claims, **characterized in that** the initial motion vectors are zero vectors.

10. Method according to one of the preceding claims, **characterized in that** the variation E between the image Î₂ and the image I₂ for each finite element e is defined by the following relationship: 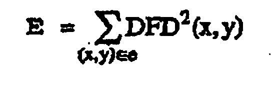 where DFD(x,y) = Y₂(x,y) - Y₁(x-dₓ,y-d_{y})

11. Method according to one of the preceding claims, **characterized in that** the interpolation formula for calculating the value of the motion vector of a point P with coordinates (x,y) in the image I₂ belonging to the finite element e with peaks Pᵢ, Pⱼ and Pₖ with respective coordinates (xᵢ,yᵢ), (xⱼ,yⱼ) and (xₖ,yₖ) is as follows: 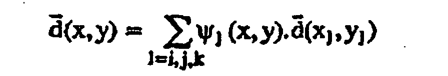 where ψ₁ is a function of the form

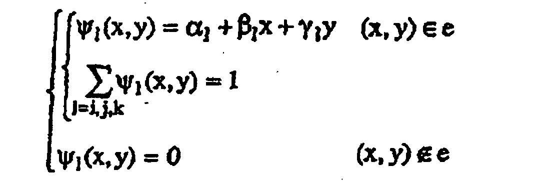

12. Method according to one of Claims 1 to 11, **characterized in that** the differential method of optimizing motion vectors is the Gauss-Newton method.

13. Method according to one of Claims 1 to 11, **characterized in that** the differential method of optimizing motion vectors is the Marquardt extension of the Gauss-Newton method.

14. Method according to one of the preceding claims, **characterized in that** a compacity constraint is imposed on each finite element at the time of optimizing the motion vectors of the finite element model, the said constraint consisting in preventing the compacity of each finite element from tending to zero.

15. Method according to Claim 14, **characterized in that** the compacity constraint on a finite element e with peaks Pᵢ, Pⱼ, Pₖ and compacity C(Pᵢ,Pⱼ,Pₖ) is defined by the following relationship:${\text{C(P}}_{\text{i}} \text{+} \vec{\text{d}} {\text{}}_{{\text{P}}_{\text{i}}} {\text{,P}}_{\text{j}} \text{+} \vec{\text{d}} {\text{}}_{{\text{P}}_{\text{j}}} {\text{,P}}_{\text{k}} \text{+} \vec{\text{d}} {\text{}}_{{\text{P}}_{\text{k}}} {\text{) ≥ K*C(P}}_{\text{i}} {\text{,P}}_{\text{j}} {\text{,P}}_{\text{k}} \text{)}$ where $\overline{\text{d}}$_{Pᵢ},$\overline{\text{d}}$_{Pⱼ} and $\overline{\text{d}}$_{Pₖ} represent the motion vectors of peaks Pᵢ, Pᵢ, Pₖ during the optimization step, and K is a compacity parameter.

16. Method according to Claim 14 or 15, **characterized in that** the optimization of the motion vectors under constraints on the finite elements is solved by the so-called augmented Lagrangian technique.

17. Method according to Claim 16, **characterized in that** the constraints are employed in a linearized form in the so-called augmented Lagrangian technique.

18. Method according to one of Claims 12, 13 or 17, **characterized in that** the motion vector optimization methods use an LDL^{t} profile technique.

19. Application of the method for estimating motion between two digital images according to one of Claims 1 to 18 for coding images **characterized in that** the fractional subdivision of the mesh used in step d) of the motion estimation method is combined with a partially quaternary tree in which each level represents a level of mesh and each node represents a triangle of the given level, and in which a bit-stream describing the said tree is generated.

20. Application of the method for estimating motion between two digital images according to Claim 19 **characterized in that** the motion vectors associated with each node of the said tree are differentially coded with respect to the motion vectors of their parent node when this exists and are organized in the said bit-stream along a widthwise path of the said tree.

21. Application of the method for estimating motion between two digital images according to one of Claims 1 to 18 for the decoding of images **characterized in that** the fractional subdivision of the mesh used in step d) of the motion estimation method is combined with a partially quaternary tree in which each level represents a level of mesh and each node represents a triangle of the given level, and in which the said tree is generated from a bit-stream of coded data describing the said tree.

22. Application of the method for estimating motion between two digital images according to Claim 21, **characterized in that** the coded data relating to the same tree level are grouped together in the bit-stream so as to generate the tree level by level as the stream is read.

23. Application of the method according to one of the preceding Claims to at least one of the fields belonging to the following group of fields:
- image sequence compression; and
- image compression in spaces with more than 2 dimensions.
